(19) Europäisches Patentamt
European Patent Office
Office européen des brevets

(11) EP 2 573 932 B1

(12) **EUROPÄISCHE PATENTSCHRIFT**

(45) Veröffentlichungstag und Bekanntmachung des Hinweises auf die Patenterteilung:
**13.08.2014  Patentblatt 2014/33**

(51) Int Cl.:
*H02P 6/18* (2006.01)        *G01R 19/00* (2006.01)
*H02M 7/5387* (2007.01)

(21) Anmeldenummer: **11182830.7**

(22) Anmeldetag: **26.09.2011**

(54) **Bürstenloser Gleichstrommotor mit SFOC-Regelung**

Brushless DC motor with SFOC regulation

Moteur sans balais doté d'un réglage SFOC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.03.2013  Patentblatt 2013/13**

(73) Patentinhaber: **Siemens Aktiengesellschaft**
**80333 München (DE)**

(72) Erfinder:
• **Kucera, Ladislav**
**8800 Thalwil (CH)**
• **Kämpf, Carlo**
**6362 Stansstad (CH)**
• **Huwiler, Adrian**
**6038 Honau (CH)**
• **Soltermann, Sacha**
**6340 Baar (CH)**

(74) Vertreter: **Maier, Daniel Oliver et al**
**Siemens AG**
**Postfach 22 16 34**
**80506 München (DE)**

(56) Entgegenhaltungen:
**EP-B1- 2 120 323    DE-T1- 19 681 189**

**Beschreibung**

Die vorliegende Erfindung betrifft ein Ansteuerverfahren und eine Steuereinrichtung für einen fürstenlosen Gleichstrommotoren.

Ein derartiges Ansteuerverfahren und die entsprechende Steuereinrichtung sowie der entsprechende bürstenlose Gleichstrommotor sind beispielsweise aus der EP 2 120 323 B1 bekannt.

Ähnlich ist aus der DE 19681189 T1 ein Elektromotor bekannt, in welchem eine einzige Stromerfassungseinrichtung den Summenstrom erfasst. Dabei ist jedoch der Taktzyklus nicht in Teilzyklen unterteilt. Es wird im jeweils gleichen Taktzyklus der Strom mehrmals gemessen, und zwar symmetrisch zur Mitte, und es werden daraus genauere Mittelwerte gebildet.

Bei Gleichstrommotoren muss im Betrieb eine Kommutierung der Phasen erfolgen. Die Anschaltung der Phasen des Gleichstrommotors ist also unter anderem von der Drehstellung eines Rotors des Gleichstrommotors abhängig. Die Kommutierung bewirkt die korrekte Bestromung der Phasen des Gleichstrommotors.

Die Kommutierung kann mittels sogenannter Kommutierungsbürsten erfolgen. Diese Ausgestaltung ist jedoch verschleißbehaftet. Im Stand der Technik erfolgt die Kommutierung daher in der Regel elektronisch.

Um eine elektronische Kommutierung korrekt durchführen zu können, muss die Drehstellung des Rotors bekannt sein. Hierfür sind im Stand der Technik verschiedene Ausgestaltungen bekannt.

So ist beispielsweise bekannt, die Drehstellung des Rotors mittels Hallsensoren zu erfassen. Diese Ausgestaltung arbeitet technisch einwandfrei, ist jedoch relativ kostenintensiv.

In jüngerer Zeit wurden weitere Technologien entwickelt, nämlich die sogenannte SBLDC und die SFOC, welche ein elektronisches Kommutieren ermöglichen, ohne Hallsensoren oder sonstige Positionssensoren wie Encoder oder Potentiometer zu benötigen. Die beiden Verfahren verfügen über ähnliche Eigenschaften, basieren aber auf unterschiedlichen physikalischen Prinzipien.

Bei dem SBLDC (= sensorless brushless direct current = sensorloser bürstenloser Gleichspannungsmotor) werden die Spannungen des Gleichstrommotors erfasst und ausgewertet. Da bei der Kommutierung zu jedem Zeitpunkt eine der drei Motorphasen unbestromt ist, kann diese Phase zur Messung der induzierten Spannung verwendet werden. Anhand des Verlaufs des Messsignals lässt sich der Zeitpunkt des Kommutierungswechsels abschätzen und daraus eine Drehstellung des Rotors ableiten. Das SBLDC-Verfahren benötigt eine Mindestdrehzahl des Rotors, da im Stillstand das Messsignal gegen 0 geht. Das Anfahren aus dem Stillstand erfolgt gesteuert, d. h. es wird ein Drehfeld angelegt, noch bevor die Drehstellung des Rotors bekannt ist.

Bei dem SFOC-Verfahren (= sensorless field oriented control = sensorlose feldorientierte Regelung) wird die Drehstellung aus einer Erfassung der magnetischen Flüsse abgeleitet. Auch dieses Verfahren benötigt für ein ordnungsgemäßes Arbeiten eine Mindestdrehzahl des Rotors. Im Gegensatz zum SBLDC-Verfahren werden beim SFOC-Verfahren Ströme gemessen, nicht Spannungen. Dieses Verfahren wird auch bei der EP 2 120 323 B1 angewendet.

Bei dem SFOC-Verfahren existieren zwei Hauptvarianten, nämlich zum einen eine Hauptvariante mit zwei oder drei Strommesseinrichtungen, die in den jeweiligen Phasenzweigen angeordnet sind, und zum anderen eine Hauptvariante mit einer einzigen Strommesseinrichtung, welche den Summenstrom führt. Aus Kostengründen ist die Hauptvariante mit einer einzigen Strommesseinrichtung vorzuziehen.

Um mittels einer einzigen Strommesseinrichtung die in den Motorphasen fließenden Phasenströme korrekt erfassen zu können, muss während eines Taktzyklus zum einen ein hinreichend großes Zeitintervall existieren, während dessen zwei Phasen an die Versorgungsspannung angeschaltet sind. Zum anderen muss während desselben Taktzyklus ein weiteres, ebenfalls hinreichend großes Zeitintervall existieren, während dessen nur eine einzige Phase an die Versorgungsspannung angeschlossen ist. Diese beiden Bedingungen sind zwar in manchen Betriebszuständen erfüllt, aber nicht zwangsläufig gegeben. Insbesondere in dem Fall, dass die Teilanschaltzeiträume die Mitte des jeweiligen Teilzyklus umfassen, symmetrisch zum jeweiligen Teilzyklus sind und in sich zusammenhängend sind, sind diese Bedingungen nicht stets erfüllbar.

Zur Lösung dieses Problems wird bei der EP 2 120 323 B1 für eine der Phasen eine Aufteilung der jeweiligen Teilbeaufschlagungszeiträume in weitere Zeiträume vorgenommen. Die beiden Teilbeaufschlagungszeiträume der genannten Phase sind also gleich groß und symmetrisch zur Mitte des jeweiligen Teilzyklus. Sie enthalten jedoch nicht die Mitte des jeweiligen Teilzyklus. Für eine andere der Phasen wird der Gesamtanschaltzeitraum in zwei Teilanschaltzeiträume aufgeteilt, die unterschiedlich groß sind.

Die Vorgehensweise der EP 2 120 323 B1 führt zwar zu befriedigenden regeltechnischen Resultaten, ist aber in der Realisierung technisch aufwändig. Insbesondere muss erfasst werden, ob ein kritischer Betriebszustand des Gleichstrommotors vorliegt, in dem eine Erfassung der Phasenströme nicht ohne Weiteres möglich ist, und ggf. die obenstehend erläuterte Modifikation der Teilanschaltzeiträume erfolgen. Weiterhin müssen die Erfassungszeitpunkte, zu denen die Phasenströme erfasst werden, in Abhängigkeit von den ermittelten Teilanschaltzeiträumen bestimmt werden.

Die Aufgabe der vorliegenden Erfindung besteht daher darin, Möglichkeiten zu schaffen, mittels derer die Ermittlung der Teilanschaltzeiträume und die Erfassung der Phasenströme vereinfacht werden können, obwohl nur eine einzige Strommesseinrichtung vorhanden ist.

Die Aufgabe wird durch ein Ansteuerverfahren mit den Merkmalen des Anspruchs 1 gelöst. Eine vorteilhafte Ausgestaltung des erfindungsgemäßen Ansteuerverfahrens ist Gegenstand des abhängigen Anspruchs 2.

Erfindungsgemäß ist vorgesehen, ein Ansteuerverfahren nach Anspruch 1 auszugestalten,

Die Lage des mindestens einen fest vorgegebenen Zeitintervalls kann nach Bedarf bestimmt sein. Insbesondere können die Zeitintervalle zwischen 20 % und 30 % und/oder zwischen 70 % und 80 % des jeweiligen Teilzyklus liegen.

Erfindungsgemäß ist die Steuereinrichtung derart ausgebildet oder programmiert, dass sie den bürstenlosen Gleichstrommotor gemäß einem erfindungsgemäßen Ansteuerverfahren betreibt.

Die Aufgabe wird weiterhin durch einen bürstenlosen Gleichstrommotor mit den Merkmalen des Anspruchs 3 gelöst. Erfindungsgemäß ist vorgesehen, einen bürstenlosen Gleichstrommotor der eingangs genannten Art dadurch auszugestalten, dass die Steuereinrichtung erfindungsgemäß ausgebildet oder programmiert ist.

Der entsprechende bürstenlose Gleichstrommotor kann beispielsweise als Antrieb für ein Ventil oder eine Klappe verwendet werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1    einen Gleichstrommotor mit Stelleinrichtung und Steuereinrichtung,
FIG 2    eine detaillierte Darstellung der Stelleinrichtung und der Steuereinrichtung,
FIG 3    einen Taktzyklus des Standes der Technik und
FIG 4    einen erfindungsgemäßen Taktzyklus.

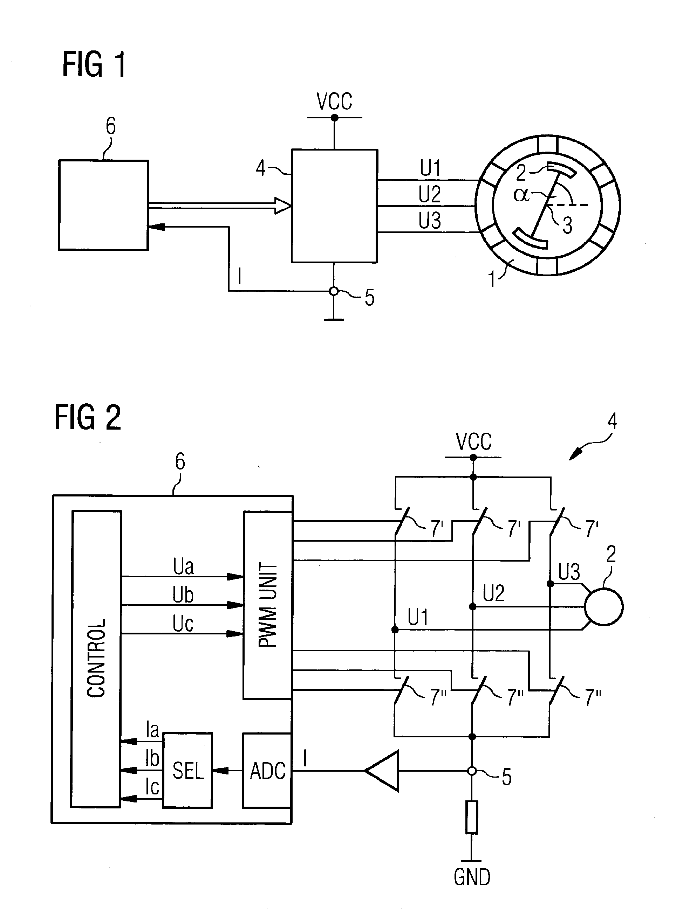

Gemäß FIG 1 weist ein bürstenloser Gleichstrommotor einen Stator 1 und einen Rotor 2 auf. Der Rotor 2 ist relativ zum Stator 1 um eine Drehachse 3 drehbar gelagert.

Der Gleichstrommotor weist weiterhin eine Stelleinrichtung 4 auf. Mittels der Stelleinrichtung 4 sind Phasen U1, U2, U3 des Gleichstrommotors an eine Versorgungsspannung VCC anschaltbar. Der Stelleinrichtung 4 ist eine einzige Stromerfassungseinrichtung 5 nachgeordnet.

Der Gleichstrommotor weist weiterhin eine Steuereinrichtung 6 auf. Die Steuereinrichtung 6 kann insbesondere als programmierte oder als festverdrahtete Steuereinrichtung 6 ausgebildet sein. Die Steuereinrichtung 6 ist mit der Stelleinrichtung 4 verbunden, damit die Steuereinrichtung 6 die Stelleinrichtung 4 ansteuern kann. Die Steuereinrichtung 6 ist weiterhin mit der Stromerfassungseinrichtung 5 verbunden, damit die Steuereinrichtung 6 den von der Stromerfassungseinrichtung 5 jeweils erfassten Gesamtstrom I entgegennehmen kann. Die Steuereinrichtung 6 ist derart programmiert oder ausgebildet, dass sie ein Ansteuerverfahren für den Gleichstrommotor ausführt, was nachstehend näher erläutert wird.

Die Steuereinrichtung 6 weist zur Durchführung des Ansteuerverfahrens üblicherweise intern einen AD-Wandler ADC, eine Auswahlschaltung SEL, eine Steuerschaltung CONTROL und eine Pulsweitenmodulationseinheit PWMUNIT auf. Insbesondere ermittelt die Steuereinrichtung 6 im Betrieb des Gleichstrommotors unter Verwendung der mittels der Stromerfassungseinrichtung 5 erfassten Stromwerte die Drehstellung $\alpha$ des Rotors 2. Unter Verwendung der Drehstellung $\alpha$ des Rotors 2 ermittelt die Steuereinrichtung 6 Sollspannungen Ua, Ub, Uc für die Phasen U1, U2, U3 des Gleichstrommotors. Die Ermittlung der Sollspannungen Ua, Ub, Uc bei gegebener Drehstellung $\alpha$ des Rotors 2 ist Fachleuten bekannt.

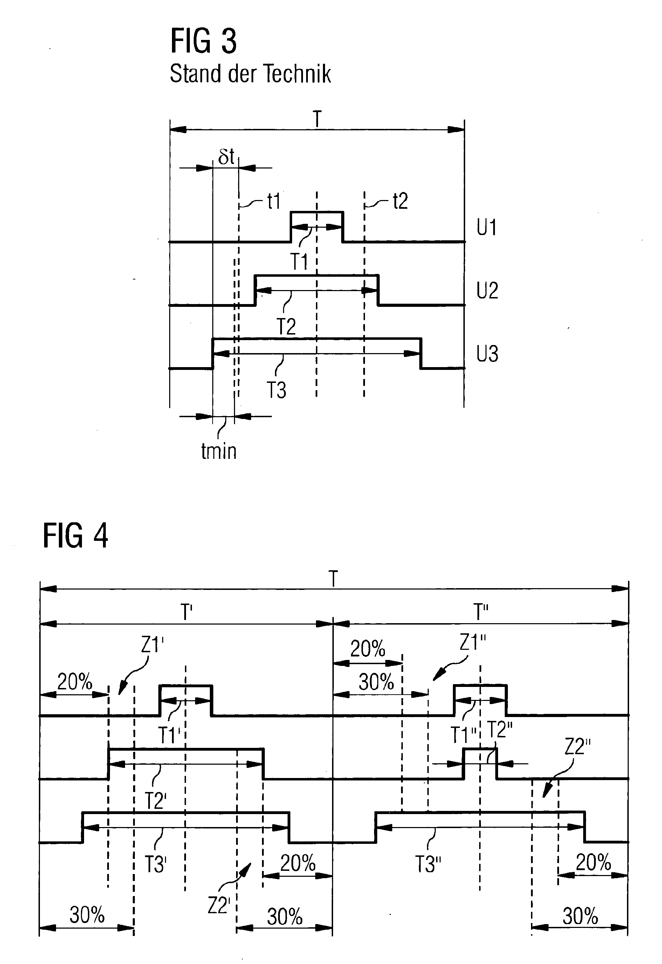

Die Steuereinrichtung 6 steuert die Stelleinrichtung 4 entsprechend den für die Phasen U1, U2, U3 ermittelten Sollspannungen Ua, Ub, Uc an. Insbesondere erfolgt die Ansteuerung - siehe FIG 3 - in Taktzyklen T. Die Sollspannungen Ua, Ub, Uc sind jeweils für einen Taktzyklus T gültig. Die Steuereinrichtung 6 ermittelt für jede Phase U1, U2, U3 einen Gesamtanschaltzeitraum T1, T2, T3 für die Phasen U1, U2, U3. Insbesondere ermittelt die Steuereinrichtung 6 für die erste Phase U1 deren Gesamtanschaltzeitraum T1 gemäß der Beziehung

$$T1 = \frac{Ua}{VCC} \cdot T \qquad\qquad (1).$$

In analoger Weise ermittelt die Steuereinrichtung 6 die Gesamtanschaltzeiträume T2, T3 für die zweite und die dritte Phase U2, U3.

Die Ansteuerung der Stelleinrichtung 4 durch die Steuereinrichtung 6 erfolgt für die erste Phase U1 derart, dass - siehe die FIG 2 und 3 - während des Gesamtanschaltzeitraums T1 für die erste Phase U1 das in FIG 2 obere Schaltelement 7' für die erste Phase U1 durchgeschaltet wird, die Versorgungsspannung VCC also an die erste Phase U1 angeschaltet wird. Das untere Schaltelement 7" für die erste Phase U1 wird für diesen Zeitraum T1 gesperrt. Außerhalb des Gesamtanschaltzeitraums T1 für die erste Phase U1 ist es umgekehrt. In diesem Zeitraum ist das obere Schaltelement 7' für die erste Phase U1 gesperrt, das untere Schaltelement 7" für die erste Phase U1 hingegen durchgeschaltet. In analoger Weise erfolgt die Ansteuerung der weiteren oberen und unteren Schaltelemente 7', 7" für die zweite und die dritte Phase U2, U3.

Auch die entsprechende Ermittlung der Gesamtanschaltzeiträume T1, T2, T3 und die entsprechende Ansteuerung der Stelleinrichtung 4 ist Fachleuten allgemein bekannt.

Um die Drehstellung $\alpha$ des Rotors 2 gemäß dem SFOC-Verfahren ermitteln zu können, müssen (unter anderem) die in den Phasen U1, U2, U3 fließenden Phasenströme Ia, Ib, Ic bekannt sein. Hierbei ist es ausreichend, zwei der drei Phasenströme Ia, Ib, Ic messtechnisch zu erfassen, weil zusätzlich die Beziehung

$$Ia + Ib + Ic = 0 \qquad\qquad (2)$$

gilt und somit bei einer der Phasenströme Ia, Ib, Ic anhand der beiden anderen Phasenströme Ia, Ib, Ic rein rechnerisch ermittelt werden kann.

Um die Phasenströme Ia, Ib, Ic zu erfassen, ist es bei der in FIG 1 und FIG 2 dargestellten Beschaltung des Gleichstrommotors erforderlich, zu bestimmten Zeitpunkten den Gesamtstrom I zu erfassen. Wird - rein beispielhaft - zu den Zeitpunkten t1 und t2 (siehe FIG 3) der jeweils fließende Gesamtstrom I erfasst, so ist der zu Zeitpunkt t1 fließende Gesamtstrom I mit dem Phasenstrom Ic identisch. In analoger Weise ist der zum Zeitpunkt t2 fließende Gesamtstrom I invers zum Phasenstrom Ia. Eine zuverlässige Zuordnung des erfassten Gesamtstroms I zu einem der Phasenströme Ia, Ib, Ic ist jedoch nur dann möglich, wenn zwischen dem Erfassungszeitpunkt t1, t2 und dem jeweils unmittelbar vorhergehenden Schaltvorgang eine Zeitspanne $\delta t$ liegt, die mindestens so groß wie eine Minimalzeitspanne tmin ist. Diese Bedingung ist in dem in FIG 3 dargestellten Fall, in dem pro Taktzyklus T für jede Phase U1, U2, U3 jeweils ein einziger, in sich zusammenhängender Gesamtanschaltzeitraum T1, T2, T3 ermittelt wird, der die Mitte des jeweiligen Taktzyklus T umfasst und symmetrisch zur Mitte des jeweiligen Taktzyklus T ist, nicht unter allen Umständen zu gewährleisten.

Erfindungsgemäß unterteilt die Steuereinrichtung 6 daher gemäß FIG 4 die Taktzyklen T in jeweils zwei Teilzyklen T', T". Die Teilzyklen T', T" sind gleich groß und folgen unmittelbar aufeinander.

Weiterhin ermittelt die Steuereinrichtung 6 für jede Phase U1, U2, U3 für jeden Teilzyklus T', T" einen jeweiligen Teilanschaltzeitraum T1', T1", T2', T2", T3', T3". Für jeden Teilanschaltzeitraum T1', T1", T2', T2", T3', T3" gilt, dass er in sich zusammenhängend ist, die Mitte des jeweiligen Teilzyklus T', T" umfasst und symmetrisch zur Mitte des jeweiligen Teilzyklus T', T" ist. Weiterhin gilt für jede Phase U1, U2, U3, dass die Summe der beiden Teilanschaltzeiträume T1', T1", T2', T2", T3', T3" für die jeweilige Phase U1, U2, U3 gleich dem Gesamtanschaltzeitraum T1, T2, T3 für die jeweilige Phase U1, U2, U3 ist. Es gilt also beispielsweise für die erste Phase U1 die Beziehung

$$T1 = T1' + T1" \qquad\qquad (3).$$

Analoge Beziehungen gelten für die beiden anderen Phasen U2, U3.

Je nach Betriebszustand des Gleichstrommotors kann gelten, dass pro Phase U1, U2, U3 die beiden jeweiligen Teilanschaltzeiträume T1', T1", T2', T2", T3', T3" untereinander gleich groß sind. Zwingend ist dies jedoch nicht erforderlich. Insbesondere ist es möglich, für mindestens eine der Phasen U1, U2, U3 den Teilanschaltzeitraum T1', T2', T3' des ersten Teilzyklus T' zu vergrößern und hiermit korrespondierend den Teilanschaltzeitraum T1", T2", T3" des zweiten Teilzyklus T" entsprechend zu verkleinern. Dies ist in FIG 4 für die Phase U2 dargestellt. Weiterhin ist auch die inverse Vorgehensweise möglich, dass also das Vergrößern und das Verkleinern vertauscht werden. Weiterhin ist die entsprechende Vorgehensweise auch bei mehr als einer Phase U1, U2, U3 innerhalb desselben Taktzyklus T anwendbar. Im Falle der Anwendung bei nur einer einzigen Phase U1, U2, U3 erfolgt die asymmetrische Aufteilung des entsprechenden Gesamtanschaltzeitraums T1, T2, T3 vorzugsweise für den zeitlich mittleren Gesamtanschaltzeitraum T1, T2, T3.

Aufgrund der Freiheitsgrade, die das ungleichmäßige Verteilen der Gesamtanschaltzeiträume T1, T2, T3 der Phasen U1, U2, U3 auf die entsprechenden Teilanschaltzeiträume T1', T1", T2', T2", T3', T3" eröffnet, ist es für die Steuereinrichtung 6 ohne Weiteres möglich, die Teilanschaltzeiträume T1', T1", T2', T2", T3', T3" der Phasen U1, U2, U3 derart aufeinander abzustimmen, dass in einem fest vorgegebenen - d. h. vorab bekannten und nicht in Abhängigkeit vom Betriebszustand des Gleichstrommotors variierten - Zeitintervall Z1' des ersten Teilzyklus T' eine Stromerfassung für eine erste der Phasen U1, U2, U3 - beispielsweise für die Phase U1 - möglich ist und weiterhin in einem ebenfalls fest vorgegebenen Zeitintervall Z1" des zweiten Teilzyklus T" eine Stromerfassung für eine weitere der Phasen U1, U2, U3 - beispielsweise die Phase U3 - möglich ist. Die Lage des jeweils fest vorgegebenen Zeitintervalls Z1', Z1" kann beispielsweise bei ca. 25 % des jeweiligen Teilzyklus T', T" sein, also beispielsweise zwischen 20 % und 30 % des jeweiligen Teilzyklus T', T". Alternativ ist es möglich, ein anderes Zeitintervall Z2', Z2" zu bestimmen, dessen Lage bei ca. 75 % des jeweiligen Teilzyklus T', T" ist, also zwischen 70 % und 80 % des jeweiligen Teilzyklus T', T". Es ist sogar möglich, beide Zeitintervalle Z1', Z1", Z2', Z2" vorzusehen.

Die vorliegende Erfindung weist deutliche Vorteile gegenüber dem Stand der Technik auf. Insbesondere ist es möglich, den Gesamtstrom I zu festen Abtastzeitpunkten zu erfassen. Diese Vorgehensweise vereinfacht die Implementierung des Ansteuerverfahrens. Der erfindungsgemäße Gleichstrommotor kann insbesondere als Antrieb für ein Ventil oder eine Klappe eingesetzt werden.

Bezugszeichenliste

| | |
|---|---|
| 1 | Stator |
| 2 | Rotor |
| 3 | Rotationsachse |
| 4 | Stelleinrichtung |
| 5 | Stromerfassungseinrichtung |
| 6 | Steuereinrichtung |
| 7', 7" | Schaltelemente |
| I | Gesamtstrom |
| Ia, Ib, Ic | Phasenströme |
| T | Taktzyklus |
| T', T" | Teilzyklen |
| T1, T2, T3 | Gesamtanschaltzeiträume |
| T1', T1", T2', T2", T3', T3" | Teilanschaltzeiträume |
| t1, t2 | Zeitpunkte |
| tmin | Minimalzeitspanne |
| U1, U2, U3 | Phasen |
| Ua, Ub, Uc | Sollspannungen |
| VCC | Versorgungsspannung |
| Z1', Z1", Z2', Z2" | Zeitintervalle |
| $\alpha$ | Drehstellung |
| $\delta t$ | Zeitspanne |

**Patentansprüche**

1. Ansteuerverfahren für einen bürstenlosen Gleichstrommotor,

- wobei eine einzige Stromerfassungseinrichtung (5) vorhanden ist,
- wobei eine Steuereinrichtung (6) für den Gleichstrommotor unter Verwendung einer Drehstellung ($\alpha$) eines Rotors (2) des Gleichstrommotors Sollspannungen (Ua, Ub, Uc) für Phasen (U1, U2, U3) des Gleichstrommotors ermittelt,
- wobei die Steuereinrichtung (6) eine Stelleinrichtung (4) entsprechend den für die Phasen (U1, U2, U3) ermittelten Sollspannungen (Ua, Ub, Uc) ansteuert, so dass jede Phase (U1, U2, U3) innerhalb eines jeweiligen Taktzyklusses (T) während eines mit der jeweiligen Sollspannung (Ua, Ub, Uc) korrespondierenden Gesamtanschaltzeitraums (T1, T2, T3) an eine Versorgungsspannung (VCC) angeschaltet wird, und
- wobei die Steuereinrichtung (6) die Taktzyklen (T) in jeweils zwei unmittelbar aufeinander folgende gleich große Teilzyklen (T', T") unterteilt,

**dadurch gekennzeichnet, dass**
- die Steuereinrichtung (6) für jede Phase (U1, U2, U3) für jeden Teilzyklus (T', T") einen jeweiligen Teilanschaltzeitraum (T1', T1", T2', T2", T3', T3") ermittelt,

- die Steuereinrichtung (6) die Teilanschaltzeiträume (T1', T1", T2', T2", T3', T3") für jede Phase (U1, U2, U3) derart ermittelt, dass sie in sich zusammenhängen, die Mitte des jeweiligen Teilzyklus (T', T") umfassen, symmetrisch zur Mitte des jeweiligen Teilzyklus (T', T") sind und zusammen gleich dem jeweiligen Gesamtanschaltzeitraum (T1, T2, T3) der entsprechenden Phase (U1, U2, U3) für den jeweiligen Taktzyklus (T) sind, und

- die Steuereinrichtung (6) die Teilanschaltzeiträume (T1', T1", T2', T2", T3', T3") der Phasen (U1, U2, U3) derart aufeinander abstimmt, dass in mindestens einem fest vorgegebenen Zeitintervall (Z1', Z2') des ersten Teilzyklus (T') eine Stromerfassung für eine der Phasen (U1, U2, U3) und in mindestens einem fest vorgegebenen Zeitintervall (Z1", Z2") des zweiten Teilzyklus (T") eine Stromerfassung für eine weitere der Phasen (U1, U2, U3) möglich ist.

2. Ansteuerverfahren nach Anspruch 1,
   **dadurch gekennzeichnet,**
   **dass** eine Lage des mindestens einen fest vorgegebenen Zeitintervalls (Z1', Z1", Z2', Z2") zwischen 20 % und 30 % und/oder zwischen 70 % und 80 % des jeweiligen Teilzyklus (T', T") liegt.

3. Bürstenloser Gleichstrommotor,

   - wobei der Gleichstrommotor einen Stator (1) und einen relativ zum Stator (1) drehbar gelagerten Rotor (2) aufweist,
   - wobei der Gleichstrommotor eine Stelleinrichtung (4) aufweist, mittels derer Phasen (U1, U2, U3) des Gleichstrommotors an eine Versorgungsspannung (VCC) anschaltbar sind,
   - wobei der Gleichstrommotor eine Steuereinrichtung (6) aufweist, von der die Stelleinrichtung (4) ansteuerbar ist,
   - wobei der Stelleinrichtung (4) eine einzige Stromerfassungseinrichtung (5) nachgeordnet ist,
   - wobei die Stromerfassungseinrichtung (5) zum Zuführen eines von der Stromerfassungseinrichtung (5) erfassten jeweiligen Stromwertes (I) zur Steuereinrichtung (6) mit der Steuereinrichtung (6) verbunden ist,
   - wobei die Steuereinrichtung (6) ausgebildet oder programmiert ist, dass sie unter Verwendung einer Drehstellung ($\alpha$) des Rotors (2) Sollspannungen (Ua, Ub, Uc) für die Phasen (U1, U2, U3) ermittelt,
   - wobei die Steuereinrichtung (6) ausgebildet oder programmiert ist, dass sie die Stelleinrichtung (4) entsprechend den ermittelten Sollspannungen (Ua, Ub, Uc) ansteuert, so dass jede Phase (U1, U2, U3) innerhalb eines jeweiligen Taktzykluss (T) während eines mit der jeweiligen Sollspannung (Ua, Ub, Uc) korrespondierenden Gesamtanschaltzeitraums (T1, T2, T3) an die Versorgungsspannung (VCC) angeschaltet wird, und
   - wobei die Steuereinrichtung (6) ausgebildet oder programmiert ist, dass sie die Taktzyklen (T) in jeweils zwei unmittelbar aufeinander folgende gleich große Teilzyklen (T', T") unterteilt,
   **dadurch gekennzeichnet, dass**
   - die Steuereinrichtung (6) ausgebildet oder programmiert ist, dass sie für jede Phase (U1, U2, U3) für jeden Teilzyklus (T', T") einen jeweiligen Teilanschaltzeitraum (T1', T1", T2', T2", T3', T3") ermittelt,
   - die Steuereinrichtung (6) ausgebildet oder programmiert ist, dass sie die Teilanschaltzeiträume (T1', T1", T2', T2", T3', T3") für jede Phase (U1, U2, U3) derart ermittelt, dass sie in sich zusammenhängen, die Mitte des jeweiligen Teilzyklus (T', T") umfassen, symmetrisch zur Mitte des jeweiligen Teilzyklus (T', T") sind und zusammen gleich dem jeweiligen Gesamtanschaltzeitraum (T1, T2, T3) der entsprechenden Phase (U1, U2, U3) für den jeweiligen Taktzyklus (T) sind, und
   - die Steuereinrichtung (6) ausgebildet oder programmiert ist, dass sie die Teilanschaltzeiträume (T1', T1", T2', T2", T3', T3") der Phasen (U1, U2, U3) derart aufeinander abstimmt, dass in mindestens einem fest vorgegebenen Zeitintervall (Z1', Z2') des ersten Teilzyklus (T') eine Stromerfassung für eine der Phasen (U1, U2, U3) und in mindestens einem fest vorgegebenen Zeitintervall (Z1", Z2") des zweiten Teilzyklus (T") eine Stromerfassung für eine weitere der Phasen (U1, U2, U3) möglich ist.

4. Gleichstrommotor nach Anspruch 3,
   **dadurch gekennzeichnet,**
   **dass** er als Antrieb für ein Ventil oder eine Klappe verwendet wird.

## Claims

1. Drive method for a brushless DC motor,

   - wherein a single current detection device (5) is present,
   - wherein a control device (6) for the DC motor determines target voltages (Ua, Ub, Uc) for phases (U1, U2, U3) of the DC motor using a rotational position ($\alpha$) of a rotor (2) of the DC motor,
- wherein the control device (6) controls a setting device (4) in accordance with the target voltages (Ua, Ub, Uc) determined for the phases (U1, U2, U3), such that each phase (U1, U2, U3) is connected to a supply voltage (VCC) within a respective clock cycle (T) during an overall switching period (T1, T2, T3) corresponding to the respective target voltage (Ua, Ub, Uc), and
- wherein the control device (6) divides the clock cycles (T) in each case into two immediately consecutive equal-sized sub-cycles (T', T"),
**characterised in that**
- for each phase (U1, U2, U3) the control device (6) determines a respective divisional switching period (T1', T1", T2' T2", T3', T3") for each sub-cycle (T', T"),
- the control device (6) determines the divisional switching periods (T1', T1", T2' T2", T3', T3") for each phase (U1, U2, U3) such that they cohere, encompass the centre of the respective sub-cycle (T', T"), are symmetrical to the centre of the respective sub-cycle (T', T") and are together equal to the respective overall switching period (T1, T2, T3) of the corresponding phase (U1, U2, U3) for the respective clock cycle (T), and
- the control device (6) aligns the divisional switching periods (T1', T1", T2' T2", T3', T3") of the phases (U1, U2, U3) to one another such that in at least one fixed time interval (Z1', Z2') of the first sub-cycle (T') it is possible to detect the current for one of the phases (U1, U2, U3) and in at least one fixed time interval (Z1", Z2") of the second sub-cycle (T") to detect the current for one more of the phases (U1, U2, U3).

2. Drive method according to claim 1,
**characterised in that**
a position of the at least one fixed time interval (Z1', Z1" Z2', Z2") is between 20% and 30% and/or between 70% and 80% of the respective sub-cycle (T', T").

3. Brushless DC motor,

- wherein the DC motor has a stator (1) and a rotor (2) rotatably mounted relative to the stator (1),
- wherein the DC motor has a setting device (4), by means of which phases (U1, U2, U3) of the DC motor can be connected to a supply voltage (VCC),
- wherein the DC motor has a control device (6), by which the setting device (4) can be controlled,
- wherein a single current detection device (5) is arranged downstream of the setting device (4),
- wherein the current detection device (5) is connected to the control device (6) for feeding a respective current value (I) detected by the current detection device (5) to the control device (6),
- wherein the control device (6) is designed or programmed such that by using a rotational position ($\alpha$) of the rotor (2) it determines target voltages (Ua, Ub, Uc) for the phases (U1, U2, U3),
- wherein the control device (6) is designed or programmed such that it controls the setting device (4) in accordance with the determined target voltages (Ua, Ub, Uc), such that each phase (U1, U2, U3) is connected to the supply voltage (VCC) within a respective clock cycle (T) during an overall switching period (T1, T2, T3) corresponding to the respective target voltage (Ua, Ub, Uc), and
- wherein the control device (6) is designed or programmed such that it divides the clock cycles (T) in each case into two immediately consecutive equal-sized sub-cycles (T', T"), **characterised in that**
- for each phase (U1, U2, U3) the control device (6) is designed or programmed such that it determines a respective divisional switching period (T1', T1", T2' T2", T3', T3") for each sub-cycle (T', T"),
- the control device (6) is designed or programmed such that it determines the divisional switching periods (T1', T1", T2' T2", T3', T3") for each phase (U1, U2, U3) such that they cohere, encompass the centre of the respective sub-cycle (T', T"), are symmetrical to the centre of the respective sub-cycle (T', T") and are together equal to the respective overall switching period (T1, T2, T3) of the corresponding phase (U1, U2, U3) for the respective clock cycle (T), and
- the control device (6) is designed or programmed such that it aligns the divisional switching periods (T1', T1", T2' T2", T3', T3") of the phases (U1, U2, U3) to one another such that in at least one fixed time interval (21', Z2') of the first sub-cycle (T') it is possible to detect the current for one of the phases (U1, U2, U3) and in at least one fixed time interval (Z1", Z2") of the second sub-cycle (T") to detect the current for one more of the phases (U1, U2, U3).

4. DC motor according to claim 3,
**characterised in that**
it is used as a drive for a valve or a flap.

**Revendications**

1. Procédé de commande pour un moteur à courant continu sans balais,

- dans lequel un seul moyen de détection de courant (5) est prévu,
- dans lequel un dispositif de commande (6) pour le moteur à courant continu détermine, au moyen d'une position de rotation ($\alpha$) d'un rotor (2) du moteur à courant continu, des tensions de consigne (Ua, Ub, Uc) pour des phases (U1, U2, U3) du moteur à courant continu,
- dans lequel le dispositif de commande (6) commande un dispositif de réglage (4) en fonction des tensions de consigne (Ua, Ub, Uc) ayant été déterminées pour les phases (U1, U2, U3), de façon à connecter chaque phase (U1, U2, U3) à une tension d'alimentation (VCC) durant un cycle d'horloge (T) respectif pendant un laps de temps total de connexion (T1, T2, T3) correspondant à la tension de consigne (Ua, Ub, Uc)respective, et
- dans lequel le dispositif de commande (6) divise chacun des cycles d'horloge (T) en deux cycles partiels (T', T") immédiatement successifs de même longueur,
**caractérisé en ce que**
- le dispositif de commande (6) détermine pour chaque phase (U1, U2, U3), pour chaque cycle partiel (T', T"), un laps de temps partiel de connexion (T1', T1", T2', T2", T3', T3") respectif,
- le dispositif de commande (6) détermine les laps de temps partiels de connexion (T1', T1", T2', T2", T3', T3") pour chaque phase (U1, U2, U3) de façon qu'ils soient cohérents, qu'ils englobent le milieu du cycle partiel (T', T") respectif, qu'ils soient symétriques au milieu du cycle partiel (T', T") respectif et que leur somme soit égale au laps de temps total de connexion (T1, T2, T3) respectif de la phase correspondante (U1, U2, U3) pour le cycle d'horloge (T) respectif, et
- le dispositif de commande (6) accorde entre eux les laps de temps partiels de connexion (T1', T1", T2', T2", T3', T3") des phases (U1, U2, U3) de façon à permettre, dans au moins un intervalle de temps fixe imposé (Z1', Z2') du premier cycle partiel (T'), une détection de courant pour une des phases (U1, U2, U3) et, dans au moins un intervalle de temps fixe imposé (Z1", 22") du deuxième cycle partiel (T"), une détection de courant pour une autre des phases (U1, U2, U3).

2. Procédé de commande selon la revendication 1,
**caractérisé**
**en ce qu'**une position du au moins un intervalle de temps fixe imposé (Z1', Z1'', Z2', Z2'') est comprise entre 20% et 30% et/ou entre 70% et 80% du cycle partiel (T', T'') respectif.

3. Moteur à courant continu sans balais,

- le moteur à courant continu comprenant un stator (1) et un rotor (2) monté en rotation par rapport au stator (1),
- le moteur à courant continu comprenant un dispositif de réglage (4) permettant de connecter des phases (U1, U2, U3) du moteur à courant continu à une tension d'alimentation (VCC),
- le moteur à courant continu comprenant un dispositif de commande (6) permettant de commander le dispositif de réglage (4),
- le dispositif de réglage (4) étant suivi d'un seul moyen de détection de courant (5),
- le moyen de détection de courant (5) étant relié au dispositif de commande (6) pour fournir au dispositif de commande (6) une valeur de courant (I) respective, détectée par le dispositif de détection de courant (5),
- le dispositif de commande (6) étant conçu ou programmé pour qu'il détermine, au moyen d'une position de rotation ($\alpha$) du rotor (2), des tensions de consigne (Ua, Ub, Uc) pour les phases (U1, U2, U3),
- le dispositif de commande (6) étant conçu ou programmé pour qu'il commande le dispositif de réglage (4) en fonction des tensions de consigne (Ua, Ub, Uc) déterminées, de façon que chaque phase (U1, U2, U3) soit connectée à une tension d'alimentation (VCC) durant un cycle d'horloge (T) respectif pendant un laps de temps total de connexion (T1, T2, T3) correspondant à la tension de consigne (Ua, Ub, Uc) respective, et
- le dispositif de commande (6) étant conçu ou programmé pour qu'il divise chacun des cycles d'horloge (T) en deux cycles partiels (T', T") immédiatement successifs de même longueur,
**caractérisé en ce que**
- le dispositif de commande (6) est conçu ou programmé pour qu'il détermine pour chaque phase (U1, U2, U3), pour chaque cycle partiel (T', T''), un laps de temps partiel de connexion (T1', T1'', T2', T2", T3', T3'') respectif,
- le dispositif de commande (6) est conçu ou programmé pour qu'il détermine les laps de temps partiels de connexion (T1', T1'', T2', T2", T3', T3'') pour chaque phase (U1, U2, U3) de façon qu'ils soient cohérents, qu'ils englobent le milieu du cycle partiel (T', T'') respectif, qu'ils soient symétriques au milieu du cycle partiel (T', T'') respectif et que leur somme soit égale au laps de temps total de connexion (T1, T2, T3) respectif de la phase correspondante (U1, U2, U3) pour le cycle d'horloge (T) respectif, et

- le dispositif de commande (6) est conçu ou programmé pour qu'il accorde entre eux les laps de temps partiels de connexion (T1', T1'', T2', T2'', T3', T3'') des phases (U1, U2, U3) de façon à permettre, dans au moins un intervalle de temps fixe imposé (Z1', Z2') du premier cycle partiel (T'), une détection de courant pour une des phases (U1, U2, U3) et, dans au moins un intervalle de temps fixe imposé (Z1'', Z2'') du deuxième cycle partiel (T''), une détection de courant pour une autre des phases (U1, U2, U3).

4. Moteur à courant continu selon la revendication 3,
   **caractérisé**
   **en ce qu'**il est utilisé comme entraînement pour une soupape ou un clapet.

## FIG 1

## FIG 2

## FIG 3
Stand der Technik

## FIG 4

**EP 2 573 932 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2120323 B1
- DE 19681189 T1